# EUROPEAN PATENT APPLICATION

(11) **EP 4 721 616 A1**
(43) Date of publication of application: **08.04.2026**
(21) Application number: 25205339.2
(22) Date of filing: 29.09.2025
(51) Int. Cl.: A43B 13/12, A43B 13/18, B29D 35/14

(54) **LAYERED SOLE STRUCTURE FOR A SHOE**

(30) Priority: 07.10.2024 US 202418908225
(71) Applicant: adidas AG, 91074 Herzogenaurach (DE)
(72) Inventor: Corcoran-Tadd, Fionn Jonathan, Portland, OR 97217 (US); Padovani, Matteo Edmond, Portland, OR 97217 (US)
(74) Representative: Bardehle Pagenberg Partnerschaft mbB Patentanwälte Rechtsanwälte

(57) **Abstract**

A device and method of making a sole structure through layer-by-layer additive manufacturing is provided. The sole structure has layers of a plurality of preformed-foam pieces bonded together to define a sole structure shape. A first layer of a portion of the foam pieces is deposited. An area of the foam pieces is selectively bonded in the first layer to define a sole structure shape. A second layer of a portion of the foam pieces is deposited. The area of the foam pieces is selectively bonded in the second layer to define the sole structure shape.

## Description

### TECHNICAL FIELD

The present application relates to a layered sole for a shoe and a layer-by-layer additive method of manufacturing the sole.

### BACKGROUND

Footwear typically includes an upper and a sole. The shoe upper secures the shoe to the wearer's foot and may be made of leather and/or synthetic materials to comfortably cover the wearer's foot and provide protection and ventilation. The sole is the part of the shoe that sits below the wearer's foot. In athletic footwear in particular, the sole may be constructed of several layers such as an insole, a midsole, and an outsole. The midsole is a layer between the insole and the outsole and typically forms the middle layer of the sole structure. The midsole is typically formed of a resilient foam material that helps typically provide extra energy absorption and ground reaction force attenuation in athletic shoes.

### SUMMARY

In one or more embodiments, a method of making a sole structure is provided. The method includes forming a plurality of foam pieces. A first layer of a portion of the foam pieces is deposited. An area of the foam pieces is selectively bonded in the first layer to define a sole structure shape. A second layer of a portion of the foam pieces is deposited. The area of the foam pieces is selectively bonded in the second layer to define a sole structure shape.

In one or more embodiments, the method of bonding includes applying an adhesive. In one or more embodiments, the method of bonding includes heating the first and second layers. In one or more embodiments, heating the first and second layers includes at least partially melting the first and second layers. In one or more embodiments, the method of at least partially melting uses at least one of infrared heat, laser or conduction heater. In one or more embodiments, the method includes removing unbonded excess pieces.

In one or more embodiments, the plurality of foam pieces includes a first type of foam pieces and a second type of foam pieces different from the first type. In one or more embodiments, the plurality of foam pieces are formed of expanded (thermoplastic polyurethane) TPU.

In one or more embodiments, a sole structure of a shoe is provided having at least a first layer and a second layer. The first layer has a first plurality of preformed-foam pieces bonded together to define a sole structure shape. The second layer having a second plurality of preformed-foam pieces bonded together and bonded to the first layer. The first and second plurality of shapes define an irregular lattice structure having a plurality of irregular voids defined between the preformed-foam pieces in the first and second layers.

In one or more embodiments, the first and second plurality of foam pieces are preformed of expanded TPU.

In one or more embodiments, the first and second layers are bonded with an adhesive. In one or more embodiments, the first and second plurality of preformed foam pieces are formed having a predetermined shape. In one or more embodiments, the predetermined shape includes at least two different predetermined shapes.

In one or more embodiments, the first layer has a first sole structure shape being different than a second sole structure shape of the second layer to define at least one of an undercut or void.

In one or more embodiments, the first and second layers form a midsole of the shoe. In one or more embodiments, the first and second layers extend from a toe region to a heel region of the midsole.

In one or more embodiments, a system for forming a sole structure of a shoe layer-by-layer is provided. The system includes a building bed. A reservoir holds a plurality of foam pieces. A distribution device supplies the foam pieces in layers on the building bed. A bond device selectively adheres the foam pieces in an area to define a sole structure shape.

In one or more embodiments, the bond device includes at least one of a laser, conduction heater, radio frequency device or infrared light that heats and at least partially melts the foam pieces in the area. In one or more embodiments, the bond device has an adhesive applicator that supplies an adhesive to the area. In one or more embodiments, the bond device is positioned above the building bed, wherein at least one of the bond device and building bed are moveable.

In one or more embodiments, the distribution device has a sweeper being driven to move relative to the building bed and move the foam pieces from the reservoir in a direction parallel to a plane of the building bed to form the layers on the building bed.

### BRIEF DESCRIPTION OF THE DRAWINGS

FIG. 1 is a flow chart of a method of making a three-dimensional structure of the present application, according to one embodiment.
FIG. 2 illustrates a side perspective view of a shoe with a sole structure according to one embodiment.
FIG. 3 illustrates a side perspective view of a shoe with a sole structure according to another embodiment.
FIG. 4 illustrates a top perspective view of a sole structure according to one embodiment.
FIG. 5 illustrates a side perspective view of the sole structure in FIG. 4.
FIG. 6 illustrates a side view of a process and machine for making a sole structure of the present application, according to one embodiment.
FIG. 7 illustrates a side view of a process and machine for making a sole structure of the present application, according to another embodiment.
FIG. 8 illustrates a top view of the process and machine in FIG. 7.

### DETAILED DESCRIPTION

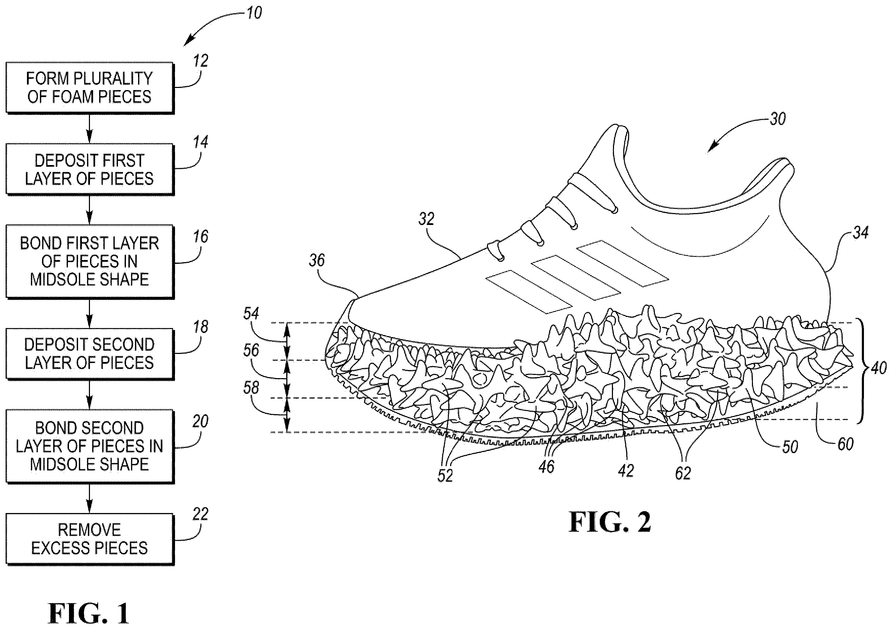

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention. Traditional foam structures, for example foam midsoles, are formed of foam pieces and may be formed in mold tools that have limitations on the geometry of the midsole. Additionally, some methods of molding the foam have high energy requirements. FIG. 1 illustrates a flow chart of a method 10 of forming three-dimensional (3D) structures using foam pieces or particles. In various embodiments, the 3D structures may be sportswear items such as clothing, shoes, pads, helmets, balls, a lattice, and/or any suitable sportswear items or portion of sportswear items. In various embodiments described herein, the 3D structures may include one or more portions of an article of footwear, such as athletic footwear. For example, the 3D structures may be a complete shoe, slides, slippers, mules, a shoe upper, a sole portion, a midsole portion, and/or an outsole.

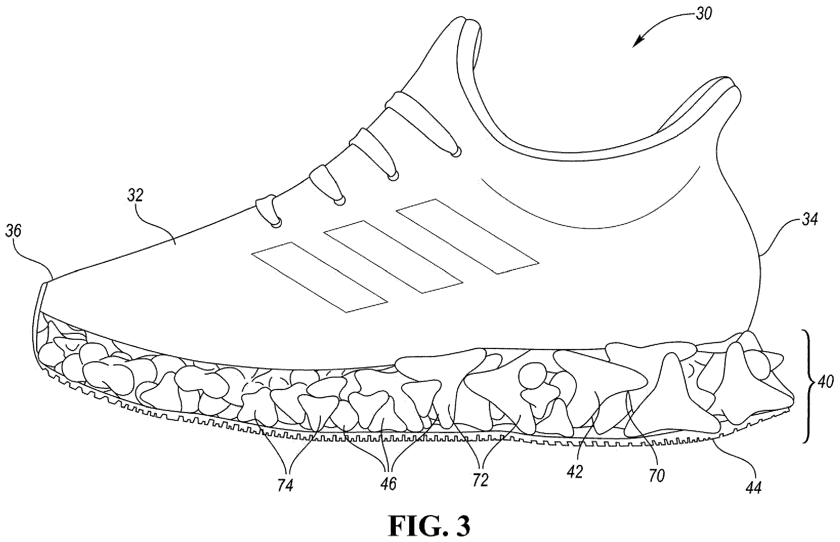

Using the method 10 of FIG. 1, 3D structures can be formed using less energy than traditional forming techniques. Additionally or alternatively, the method 10 can be used to form 3D structures that would be unable to be made using traditional forming techniques. Using the steps of method 10, three-dimensional structures can be produced that are finished goods, such as 3D structures that require few if any post processing steps prior to use. For example, the 3D structure can be produced using the method 10 and then be used as or as part of a finished product. The method 10 can additionally or alternatively be used to produce 3D structures that are prototypes of finished goods. The 3D structures of prototypes may be used for testing and/or require further steps and refinement before they are considered finished goods.

In an illustrative example, the method 10 can be used to form a footwear midsole. The midsole can be formed using foam pieces bonded together. Using the method outlined in the flow chart in FIG. 1, the midsole can be formed using less energy than traditional midsole forming techniques and/or the midsole can be built having designs and geometries that would be unable to be made using traditional midsole forming techniques.

The method 10 uses a new type of additive manufacturing that uses preformed foam pieces, or preformed foam particles, and then fuses the preformed foam pieces/particles together to create geometries for 3D structures. The additive manufacturing machine and method builds up the 3D structure layer by layer. The layer-by-layer build up allows for complex shapes that could not be achieved using traditional techniques for forming foam, such as using a mold in injection molding or steam chest molding. For example, the layer-by-layer build up allows 3D structures that have undercuts or voids and can be achieved with the additive manufacturing machine and method. Other traditional 3D printing processes may be limited by the materials that can be used in the printer. However, the method 10 provides an additive manufacturing process that uses preformed foam pieces not limited by materials. For example, the foam pieces/particles can be formed of functional foam materials, such as BOOST^{®} pellet materials or other foam materials. Therefore the method 10 allows a 3D structure, such as a midsole, to be made of preformed functional foam or other foam pellet materials in an additive manufacturing process.

As shown in FIG. 1, the method 10 of making a midsole can include an initial step 12 of preforming the plurality of foam pieces 46. The preformed foam pieces 46 may be formed by suitable methods to shape foam pieces such as injection molding, extruding, steam chest molding, RF fusion with ceramic mold and microwaves, or other foam forming processes. The preformed foam pieces 46 may also be formed of expanded polymers. The expanded polymer is formed of a polymer material that has been processed to include a significant amount of gas within its structure, resulting in a foam-like material with a reduced density compared to its solid counterpart.

The preformed foam pieces 46 may also be formed of expanded polymers such as expanded thermoplastic polyurethane (TPU) expanded ethylene vinyl acetate (EVA), expanded polypropylene (PP), polystyrene (PS), expanded polyamide (PA), expanded polyether block amide (PEBA), expanded polyoxymethylene (POM), expanded polystyrene (PS), expanded polyethylene (PE), expanded polyoxyethylene (POE), and expanded ethylene propylene diene monomeror (EPDM) or other suitable expandable polymer.

In one example, the preformed foam pieces 46 are formed of an expanded polymer such as where the material and process for forming one type of piece is described in U.S. Patent No. 10,759,096 by Smith et al., the disclosure of which is hereby incorporated by reference herein. For example, the preformed foam pieces may be formed of polyamide, variants like polyamide 6, 11, and 12. In another example, the polymer may include PEBA, a block copolymer that combines polyamide and polyether segments. To create the preformed foam pieces, a blowing agent, such as nitrogen or carbon dioxide, is introduced during the manufacturing process, which forms the cellular structure within the polymer, resulting in a lightweight and cushioning material. Chain extenders, such as styrene-acrylate copolymers, may be added that modify the polymer's melt strength and mechanical properties and molecular weight. The composition used to make the preformed pieces 46 may also include other additives like nucleating agents, plasticizers, and stabilizers.

In another example, the preformed foam pieces 46 are formed of expanded thermoplastic polyurethane (eTPU), or a combination of expanded and nonexpanded materials, as described in U.S. Patent No. 11,707,108 by Reinhardt et al., U.S. Patent No. 10,974,476 by Huu Minh Le et al., and U.S. Patent No. 11,213,093 by Wardlaw et al., the disclosures of which are hereby incorporated by reference herein. For example, the pieces 46 may be formed of layers or surface regions that are formed of a combination of expandable and not expandable materials, such as EVA, TPU, rubber, PP or other suitable materials or combination of materials. In another example, the pieces 46 may include textile layers, foil-like materials, or fiber-like reinforcements as described.

In another example, the preformed pieces 46 may be formed by a method of manufacturing that uses particles of expanded materials which are loaded into a mold using a stream or electromagnetic radiation and compressing the particles as described U.S.

Patent No. 10,259,183 by Wardlaw et al., and U.S. Patent No. 11,504,928 by Huu Minh Le et al., the disclosures of which are hereby incorporated by reference herein. In another example, the particles may be coated with a liquid matrix material which can further enhance the mechanical properties of the pieces 46.

FIGS. 2-5 illustrate an example of a sportswear item, such as the shoe 30, with one or parts made using the method 10 described in FIG. 1. The shoe 30 can include a sole structure 40 having a midsole 42 formed using the method 10. The midsole 42 can be attached to a shoe upper 32 and/or an outsole 44. For example, the shoe upper 32 can be attached to a first surface of the midsole 42 and the outsole 44 can be attached to a second surface of the midsole 42. The midsole 42 can be made of one or more layers of preformed foam pieces 46 bonded together to define the shape of the midsole 42. The layers of preformed pieces may be joined or bonded with an adhesive, a heat process, a melting process or pressure or other suitable bonding process or combination of processes to define the shape of the midsole 42. The midsole 42 can provide support and cushioning for some or all of the wearer's foot. For example, the midsole 42 can extend some or all of a longitudinal distance from the heel region 34 to the toe region 36 and/or some or all of a lateral distance from the medial side to the lateral side to provide support for the wearer's foot.

In various embodiments, the midsole 42 may include one or more portions. The one or more portions can extend some or all of the distance of the midsole 42 in a horizonal direction, from the heel region 34 to the toe region 36. For example, a first portion of the midsole 42 can extend from the heel region 34 to a midfoot region and a second portion can extend from the midfoot region to the toe region 36. Additionally or alternatively, the one or more portions can extend some or all of the lateral distance laterally and/or some or all of the vertical distance from a bottom surface to a top surface. In further embodiments, the one or more portions of the midsole 42 can include one or more types of material formed by one or more methods. For example, a first portion of the midsole 42 can be made from foam pieces 46 layer-by-layer, and a second portion of the midsole 42 can be made from a different material and/or different process. For example, and a second portion of the midsole 42 can be made from a different foam material, that is injected molded as one-piece. The sole structure 40 may also include an outsole 44 along a bottom surface of the midsole 42. The outsole 44 forms the outer exposed part and tread of the sole structure 40 that comes into contact with the ground.

FIG. 2 shows midsole 50 which is an example embodiment of midsole 42. The midsole 50 is formed of preformed foam pieces 52. For example, the foam pieces 52 can be bonded together to form the shape of the midsole 50. The midsole 50 can be completely or semi-filled with foam pieces 52. In various embodiments, the foam pieces 46 can define an irregular structure containing a plurality of irregular voids 62 defined between the preformed foam pieces in the plurality of layers 54, 56, 58. In various embodiments, the irregular structure can be or contain a structure having interconnected laths arranged in a lattice or matrix.

The foam pieces 46 can be made of or include pieces or particles of foam or foam-like material. The pieces or particles of foam can be various sizes, such as having various volumes and/or various shapes. The foam pieces 46 can be any suitable size and/or shape. In various embodiments, the foam pieces 46 can have generally the same or similar characteristics as one another, such as a similar volume, a similar size, a similar shape, a similar color, and/or a similar texture. For example, the midsole 50 can include foam pieces 46 that are generally the same shape and generally the same size, such as having generally similar or the same volume as one another. Alternatively, the foam pieces 46 can have varying characteristics, such as different volumes, different sizes, different shapes, different colors, and/or different textures or other different characteristics. For example, the midsole 50 can include foam pieces 46 that vary in size and/or shape.

In the embodiment shown in FIG. 2, the preformed foam pieces 52 are shaped as tri-pointed stars. However, the foam pieces 46 can be shaped substantially as a sphere, an oval, an ellipsoid, triangular or irregular spheres, triangles, cones, pyramids, cubes, rectangular prisms, cylinders, and/or any suitable three-dimensional shape. In various embodiments, the foam pieces 46 generally can have a volume from 0.00054 mm³ to 1 cm³, however, the foam pieces 46 can have any suitable volume. In various embodiments where the foam pieces 46 have a generally spherical shape, the foam pieces 46 can have a diameter from 0.1 mm to 1 cm. However, the foam pieces 46 that are generally spherical can have any suitable diameter.

FIG. 3 illustrates a midsole 70 which is another example embodiment of midsole 42. The midsole 70 is formed of foam pieces 46 having different shapes and sizes. As shown, the foam pieces may be generally shaped as tri-pointed stars. The foam pieces 46 may include first foam pieces 72 having a different size than second foam pieces 74. As shown, the first foam pieces 72 are larger than the second foam pieces 74. In various embodiments, the first pieces 72 and the second pieces 74 can also be different from one another in other characteristics. For example, the first pieces 72 can be a first color and the second pieces 74 can be a second different color. In some embodiments, the first pieces 72 can be a first shape and the second pieces 74 can be a second shape.

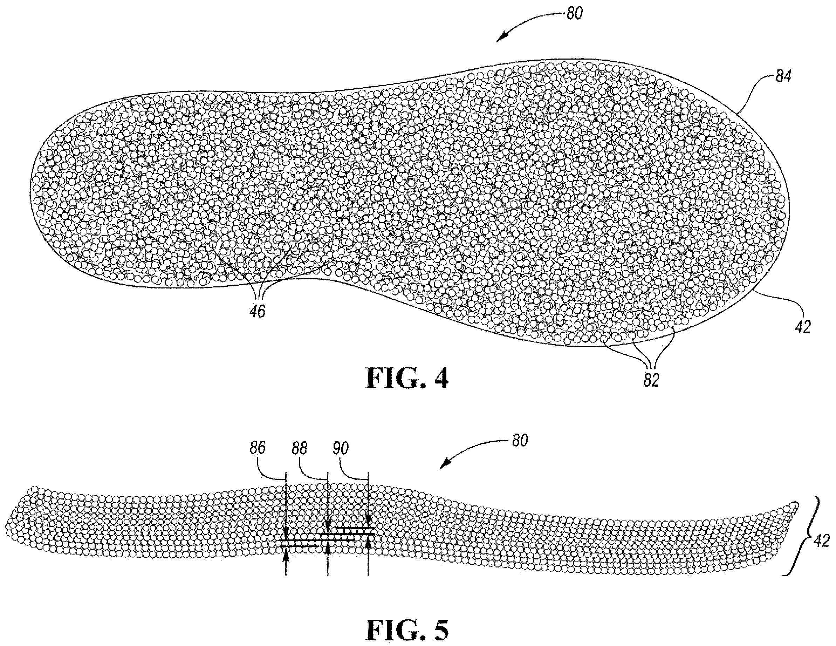

FIGS. 4-5 illustrate a midsole 80 which is another example embodiment of midsole 42. The midsole 80 is formed of preformed foam pieces 46. As shown, the preformed foam pieces 46 may be generally spherical particles 82. The spherical particles 82 may have a diameter of 0.1 mm to 1 cm, for example. The midsole 80 is formed with a plurality of layers 86, 88, 90 with each layer containing the preformed foam pieces 46 being spherical particles 82. The layers define a midsole having an overall perimeter shape 84 of the midsole 80. The perimeter shape 84 may vary along each of the layers 86, 88, 90.

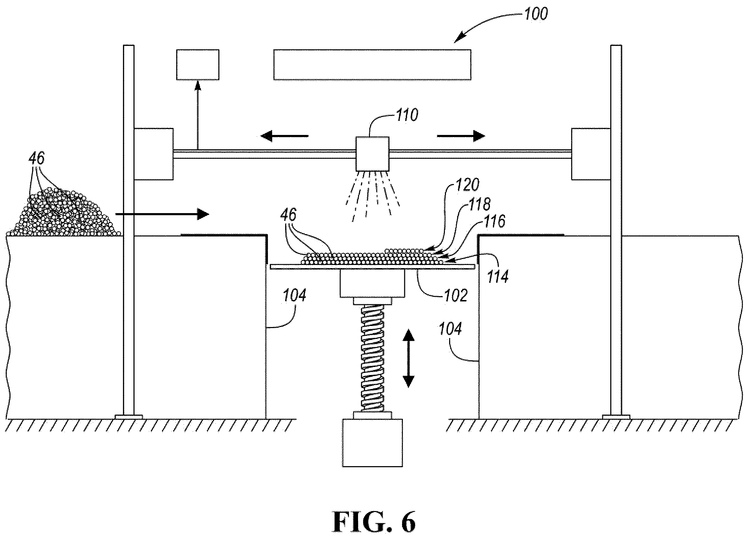

The method 10 can include step 14 of depositing the preformed foam pieces 46 in a first layer 114. The layer-by-layer additive manufacturing system 100 is illustrated in FIGS. 6-8. The preformed foam pieces 46 are deposited on the building bed 102 of the machine in a first layer 114. The preformed foam pieces 46 are supplied and deposited with a distribution device 106.

The distribution device 106 may be a hopper, a silo, a sweeper plate 136, a roller that supplies the foam pieces in a horizontal direction H across the surface of the building bed 102, and/or any suitable distribution device that deposits the foam pieces on the building bed 102. The sweeper plate 136 may move the preformed foam pieces 46 from reservoirs 104 in a sweeping motion in the horizontal direction H. Foam pieces in the reservoirs 104 may be pushed upward to be distributed by the sweeper plate 136. The sweeper plate 136 or roller may be driven by a belt, screw, or other suitable drive mechanism to move the distribution device relative to the building bed 102 and move the foam pieces from the reservoir in a direction parallel to a plane of the building bed 102 to form the layers on the building bed. Additionally or alternatively, the preformed foam pieces 46 may be dispensed vertically by dropping or spraying the foam pieces 46 on the building bed 102. The preformed foam pieces 46 may also be deposited in layers by a combination of vertical and horizontal distribution devices 106.

The machine may also have multiple reservoirs 104 that hold different preformed foam pieces 46. For example, one reservoir 104 may hold a first group of preformed foam pieces 46 that have a first characteristic, such as shape, size or color. Another reservoir 104 may hold a second group of preformed foam pieces 46 that have a second characteristic that is different from the first group of preformed foam pieces 46. First and second groups of preformed foam pieces 46 may also be mixed in the reservoirs 104.

In step 16 of method 10, the first layer 114 of preformed foam pieces 46 can be selectively bonded in an area 130 of the first layer 114 to define a sole structure shape. The first layer of foam preformed pieces 46 may cover the whole surface of the building bed 102, however only the area 130 that defines the shape of the midsole will be bonded by a bond device 110. The remaining preformed foam pieces 46 outside of the area 130 will remain as loose pieces. For example, the remaining preformed foam pieces 46 outside of the area 130 are not bonded together and/or are separate from the area 130 that defines the shape of the midsole. The bond device 110 may be positioned above the building bed 102, as illustrated in FIGS. 6-8.

The bond device 110 may be a melting device. For example, the bond device 110 may include a radio frequency device, an infrared light, a conduction heater, a laser, and/or an infrared light or other suitable melting device that heats and at least partially melts the preformed foam pieces 46 in the area 130. The bond device 110 can be positioned and/or calibrated to heat and/or melt only the preformed foam pieces 46 within the area 130. For example, the bond device 110 can partially melt the preformed foam pieces 46 to bond the pieces with adjacent pieces within the area 130 and while not bonding with adjacent pieces outside the area 130. The bond device 110 may not completely melt the preformed foam pieces 46 so that they retain their preformed shape and form the irregular lattice shape and maintain voids between the pieces. The laser may include a laser used in SLS (selective laser sinter), or any suitable laser for applying directed heat to the foam pieces. The laser may be the same or similar to SLS printing or additive manufacturing process.

Additionally, the bond device 110 may vary the output temperature to heat and/or partially melt the preformed foam pieces 46 based on the material properties of the preformed pieces 46. For example, the bond device 110 may vary the temperature to heat the preformed pieces 46 to the melting point to connect the preformed pieces. In one embodiment, the bond device 110 may vary the output between 130°C and 320°C, or suitable melting temperature of the material. In another embodiment, the bond device 110 may heat the preformed pieces 46 to below the melting point to connect and bond the pieces without melting to preserve the structure. For example, the bond device 110 may heat the preformed pieces to a temperature 100° C to 5° C below the melting point, or other suitable temperature below the melting point for bonding of the materials.

The bond device 110 can additionally or alternatively be or include an adhesive applicator that selectively supplies an adhesive to the area 130. The adhesive applicator may spray the adhesive in as aerosol or liquid particles to provide a thin even coat of the adhesive to the first layer 114 and/or subsequent layers. The bond device 110 may also apply the adhesive with a brush, roller, syringe, sheet, film or any suitable adhesive application method, or combination of methods. The adhesive material and specific method of applying the adhesive may depend on the foam material of the foam pieces being bonded. In various embodiments, the bond device 110 can include a melting device and an adhesive applicator. For example, a heating device can be used to form a first layer and an adhesive applicator can be used to form a subsequent second layer. However, the heating device and the adhesive device can be used on the same layer. For example, the heating device and the adhesive device can each form a portion of a layer.

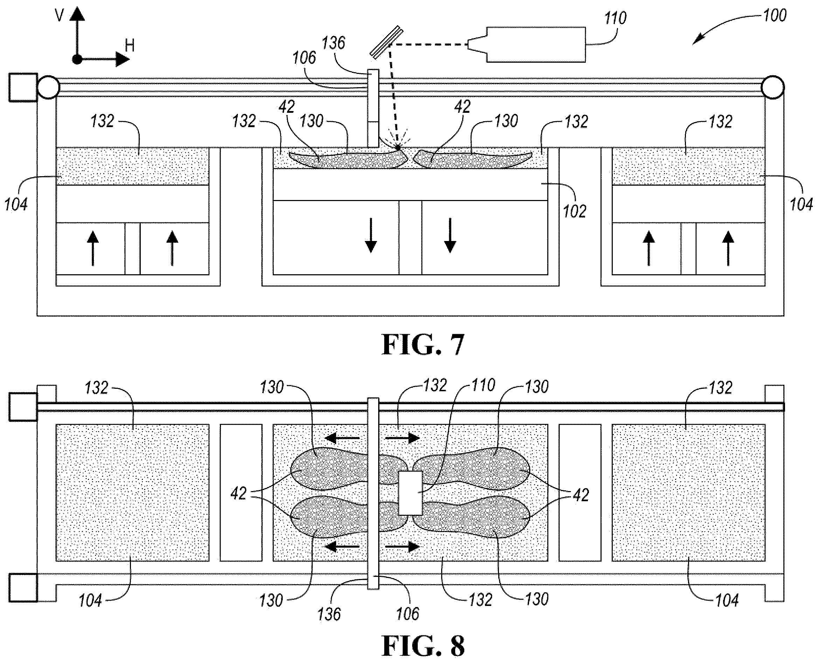

As shown in FIG. 7, multiple areas 130 may be bonded on the building bed 102. This may also allow for multiple 3D structures, such as the midsoles 42, to be formed in the same steps. In one embodiment, multiple midsoles 42 can be formed in the same steps. For example, two midsoles 42 that are mirror images may be formed to make a right and a left pair of midsoles. The areas may also have variations in shape and size to define unique 3D structures. For example, multiple midsoles of the same side or unmatched midsoles can be formed. As shown in FIG. 7, four areas 130 are formed to make four midsoles 42. For example, the four areas can be formed to make two pairs of midsoles.

After the first layer has been deposited and the area 130 of the first layer is bonded, at step 18 of method 10, the distribution device 106 can deposit the preformed foam pieces 46 in a second layer 116. The second layer 116 is deposited over both loose particles 132 as well as the bonded area 130 that defines the midsole 42. The building bed 102 may move downward in the vertical direction V by a vertical dimension generally the same as the layer thickness. For example, the building bed 102 may move downward in the vertical direction V by a vertical dimension generally the same as the thickness of the first layer 114 and/or the thickness of the second layer 116.

At step 20 of method 10, the second layer 116 is selectively bonded to the first layer 114 in the area 130. The second layer 116 of pieces is selectively bonded in an area 130 of the second layer 116 to define a sole structure shape. The second layer 116 of preformed foam pieces 46 may cover the whole building bed 102, however only the area 130 that defines the shape of the midsole will be bonded by a bond device 110. The remaining foam pieces outside of the area 130 can remain as loose pieces. The bonded area 130 of the second layer 116 may be different than the area of the first layer 114. For example, the second layer 116 can differ from the first layer 114 such that voids are formed in the 3D structure.

Steps 18 and 20 of method 10 may be repeated for additional layers. For example, steps 18 and 20 may be repeated to form layers 118 and 120, as shown in FIG. 6, as well as for additional layers. The number of layers may depend on the size of the preformed foam pieces 46, or the desired height and shape of the 3D structure. The bonded area 130 of the additional layers may be different than previous layers. For example, as shown in FIG. 6, layer 120 is different than layer 118 which may create a unique undercut feature in the resulting 3D structure.

After the final layer is deposited and bonded, at step 22 of method 10, the excess unbonded foam pieces 132 can be removed. The unbonded foam pieces 132 are loose and may be recycled for use in building a subsequent 3D structure. The unbonded foam pieces 132 may be swept or blown off the surface of the building bed 102 and/or returned to the reservoirs 104 by any suitable process.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

In the following, further embodiments of the invention are mentioned to facilitate understanding the invention:
1. A method of making a sole structure, the method comprising:
   forming a plurality of foam pieces;
   depositing a portion of the foam pieces in a first layer;
   selectively bonding an area of the foam pieces in the first layer to define a sole structure shape within the first layer;
   depositing a second portion of the foam pieces in a second layer; and
   selectively bonding the second layer to the first layer in the area.
2. The method of embodiment 1, wherein bonding comprises applying an adhesive.
3. The method of embodiment 1, wherein bonding comprises heating the first and second layers.
4. The method of embodiment 3, wherein heating the first and second layers comprises at least one of infrared heat, laser or conduction heater.
5. The method of embodiment 1, further comprising removing unbonded excess pieces.
6. The method of embodiment 1, wherein the plurality of foam pieces comprises a first type of foam pieces and a second type of foam pieces different from the first type.
7. The method of embodiment 1, wherein the plurality of foam pieces are formed of expanded (thermoplastic polyurethane) TPU.
8. A sole structure of a shoe, comprising:
   a first layer having a first plurality of preformed-foam pieces bonded together to define a sole structure shape; and
   a second layer having a second plurality of foam pieces bonded together and bonded to the first layer,
   wherein the first and second plurality of preformed-foam pieces define an irregular lattice structure having a plurality of irregular voids defined between the preformed-foam pieces in the first and second layers.
9. The sole structure of embodiment 8, wherein the first and second plurality of preformed-foam pieces are preformed of expanded TPU.
10. The sole structure of embodiment 8, wherein the first and second layers are bonded with an adhesive.
11. The sole structure of embodiment 8, wherein the first and second plurality of preformed-foam pieces are formed having a predetermined shape.
12. The sole structure of embodiment 11, wherein the predetermined shape comprises at least two different predetermined shapes.
13. The sole structure of embodiment 8, wherein the first layer has first sole structure shape being different than a second sole structure shape of the second layer to define at least one of an undercut or void.
14. The sole structure of embodiment 8, wherein the first and second layers form a midsole of the shoe.
15. The sole structure of embodiment 14, wherein the first and second layer extend from a toe region to a heel region of the midsole.
16. A system for forming a sole structure of a shoe layer-by-layer, the system comprising:
   a building bed;
   a reservoir to hold a plurality of foam pieces;
   a distribution device to supply the foam pieces in layers on the building bed; and
   a bond device to selectively adhere the foam pieces in an area to define a sole structure shape.
17. The system of embodiment 16, wherein the bond device comprises at least one of a laser, conduction heater or infrared light that heats and at least partially melts the foam pieces in the area.
18. The system of embodiment 16, wherein the bond device comprises an adhesive applicator that supplies an adhesive to the area.
19. The system of embodiment 16, wherein the distribution device comprises a sweeper being driven to move relative to the building bed and move the foam pieces from the reservoir in a direction parallel to a plane of the building bed to form the layers on the building bed.
20. The system of embodiment 16, wherein the bond device is positioned above the building bed, wherein at least one of the bond device and building bed are moveable.

## Claims

1. A method of making a sole structure, the method comprising:
forming a plurality of foam pieces;
depositing a portion of the foam pieces in a first layer;
selectively bonding an area of the foam pieces in the first layer to define a sole structure shape within the first layer;
depositing a second portion of the foam pieces in a second layer; and
selectively bonding the second layer to the first layer in the area.

2. The method of claim 1, wherein bonding comprises applying an adhesive and/or, wherein bonding comprises heating the first and second layers, wherein heating the first and second layers preferably comprises at least one of infrared heat, laser or conduction heater.

3. The method of one of claims 1 or 2, further comprising removing unbonded excess pieces.

4. The method of one of claims 1-3, wherein the plurality of foam pieces comprises a first type of foam pieces and a second type of foam pieces different from the first type.

5. The method of one of claims 1-4, wherein the plurality of foam pieces are formed of expanded (thermoplastic polyurethane) TPU.

6. A sole structure of a shoe, comprising:
a first layer having a first plurality of preformed-foam pieces bonded together to define a sole structure shape; and
a second layer having a second plurality of foam pieces bonded together and bonded to the first layer,
wherein the first and second plurality of preformed-foam pieces define an irregular lattice structure having a plurality of irregular voids defined between the preformed-foam pieces in the first and second layers.

7. The sole structure of claim 6, wherein the first and second plurality of preformed-foam pieces are preformed of expanded TPU.

8. The sole structure of one of claims 6 or 7, wherein the first and second layers are bonded with an adhesive.

9. The sole structure of one of claims 6-8, wherein the first and second plurality of preformed-foam pieces are formed having a predetermined shape, wherein the predetermined shape preferably comprises at least two different predetermined shapes.

10. The sole structure of one of claims 6-9, wherein the first layer has first sole structure shape being different than a second sole structure shape of the second layer to define at least one of an undercut or void.

11. The sole structure of one of claims 6-10, wherein the first and second layers form a midsole of the shoe, wherein the first and second layer preferably extend from a toe region to a heel region of the midsole.

12. A system for forming a sole structure of a shoe layer-by-layer, the system comprising:
a building bed;
a reservoir to hold a plurality of foam pieces;
a distribution device to supply the foam pieces in layers on the building bed; and
a bond device to selectively adhere the foam pieces in an area to define a sole structure shape.

13. The system of claim 12, wherein the bond device comprises at least one of a laser, conduction heater or infrared light that heats and at least partially melts the foam pieces in the area and/or, wherein the bond device comprises an adhesive applicator that supplies an adhesive to the area.

14. The system of one of claims 12-13, wherein the distribution device comprises a sweeper being driven to move relative to the building bed and move the foam pieces from the reservoir in a direction parallel to a plane of the building bed to form the layers on the building bed.

15. The system of one of claims 12-14, wherein the bond device is positioned above the building bed, wherein at least one of the bond device and building bed are moveable.
